# EUROPEAN PATENT SPECIFICATION

(11) **EP 2 897 208 B1**
(45) Date of publication and mention of the grant of the patent: **05.10.2016**
(21) Application number: 12884485.9
(22) Date of filing: 13.09.2012
(51) Int. Cl.: H01M 10/0562, H01M 4/58, H01M 10/052, H01M 4/04, H01M 4/136, H01B 1/08

(54) **IONIC CONDUCTOR AND SECONDARY CELL**
IONENLEITER UND SEKUNDÄRZELLE
CONDUCTEUR IONIQUE ET CELLULE SECONDAIRE

(43) Date of publication of application: 22.07.2015
(73) Proprietor: FUJITSU LIMITED, Kawasaki-shi Kanagawa 211-8588 (JP)
(72) Inventor: HOMMA, Kenji, Kawasaki-shi, Kanagawa 211-8588 (JP)
(74) Representative: Ward, James Norman
(86) International application number: PCT/JP2012/073535
(87) International publication number: WO 2014/041669

(56) References cited:
- JP-A- 2012 146 630
- E Bretey ET AL: "Crystal structure and cation transport properties of the layered monodiphosphates: Li9M3(P2O7)3(PO4)2 (M = Al, Ga, Cr, Fe)", Journal of Solid State Chemistry, vol. 138 1 June 1998 (1998-06-01), pages 32-40, XP055204672, Retrieved from the Internet: URL:http://www.osti.gov/energycitations/pr oduct.biblio.jsp?osti_id=642220
- QUAN KUANG ET AL.: 'Layered monodiphosphate Li9V3(P207)3(P04)2: A novel cathode material for lithium-ion batteries' ELECTROCHIMICA ACTA vol. 56, 2011, pages 2201 - 2205, XP055002961
- QUAN KUANG ET AL.: 'Synthesis, Structure, Electronic, Ionic, and Magnetic Properties of Li9V3(P207)3 (P04)2 Cathode Material for Li-Ion Batteries' THE JOURNAL OF PHYSICAL CHEMISTRY C vol. 115, 2011, pages 8422 - 8429, XP055002960

## Description

### TECHNICAL FIELD

The present invention relates to an ionic conductor and a secondary battery.

### BACKGROUND ART

In an energy power harvesting technique that stores, and utilizes for a sensor or wireless transmission electric power, electric power generated from minute energy such as sunlight, oscillation, or a body temperature of a human being or an animal, a safe and highly reliable secondary battery under any terrestrial environment is desired. A secondary battery that has widely been utilized at present uses an organic electrolyte solution that is a liquid, and may cause a positive electrode active substance to be degraded due to multiple use thereof and a capacitance of the battery to be lowered or may cause an organic electrolyte in the secondary battery to be ignited and take fire due to a battery short circuit caused by formation of a dendrite. Therefore, it is not preferable to use a current secondary battery that uses an organic electrolyte solution, in, for example, energy power harvesting wherein utilization for 10 years or more is expected, from the viewpoint of reliability or safety thereof.

On the other hand, attention is being paid to an all-solid lithium secondary battery that does not use an organic electrolyte and is entirely formed of solid component materials, because there is not a risk of solution leaking, firing, or the like and a cycle characteristic thereof is also excellent. For a lithium-ionic conductor that is a solid electrolyte to be used for such an all-solid lithium secondary battery, there is provided an oxide type, a sulfide type, or the like. For an oxide type, there is provided a LISICON (LIthium SuperIonic CONductor) structure based on Li₃PO₄ or Li₄GeO₄, a NASICON (Na SuperIonic CONductor) structure based on an sodium-ionic conductor, a LiLaZrO garnet structure, a perovskite structure such as an LLTO, or the like. Furthermore, for a sulfide type, there is provided Li₁₀GeP₂S₁₁, Li₇P₃S₁₁, or the like.

Meanwhile, although LiCoO₂ (theoretical capacitance: 137 mAh/g) has widely spread for a positive electrode material of a secondary battery, Non-patent Document 6 discloses, in a recent year, Li₉V₃(P₂O₇)₃(PO₄)₂ (theoretical capacitance: 173 mAh/g) that exceeds this. This Li₉V₃ (P₂O₇)₃(PO₄)₂ utilizes an oxidation reduction reaction of V³⁺ → V⁵⁺, and has a theoretical capacitance that is 1.2 times as large as that of LiCoO₂.

### PRIOR ART DOCUMENTS

### PATENT DOCUMENTS

Patent Document 1: Japanese Laid-Open Patent Application No. 2007-528108
Patent Document 2: Japanese Laid-Open Patent Application No. 2010-272344
Patent Document 3: Japanese Laid-Open Patent Application No. H08-198638

### NON-PATENT DOCUMENTS

Non-patent Document 1: H. Y-P. Hong., Materials Research Bulletin, Volume 13, Issue 2, February 1978, Pages 117-124
Non-patent Document 2: R. Murugan, V. Thangadurai, W. Weppner., Angew. Chem. Int. Ed., (2007), 46, p. 7778-7781
Non-patent Document 3: Y. Inaguma, C. Liquan*, M. Itoh, T. Nakamura, T. Uchida, H. Ikuta, M. Wakihara., Solid State Communications Volume 86, Issue 10, June 1993, Pages 689-693
Non-patent Document 4: N. Kamaya, K. Homma, Y. Yamakawa, M. Hirayama, R. Kanno, M. Yonemura, T. Kamiyama, Y. Kato, S. Hama, K. Kawamoto & A. Mitsui., Nature Materials Volume: 10, Pages: 682-686 Year published: (2011)
Non-patent Document 5: A. Hayashi, S. Hama, T. Minami, M. Tatsumisago., Electrochem. Commun., 5 (2003), p. 111
Non-patent Document 6: Electrochimica Acta 56 (2011) 2201-2205
Non-patent Document 7: Journal of The Electrochemical Society, 159 (5) A622 - A633 (2012)

"Crystal structure and cation transport properties of the layered monodiphosphates: LigM3(P2O7)3(PO4)2 (M = Al, Ga, Cr, Fe) " , Bretey et al, discloses a series of isotypic monodiphosphates and their crystal structure.

JP 2012 146630 discloses a positive electrode active material and a lithium ion secondary battery using the positive electrode active material.

Reference is made also to "Synthesis, Structure, Electronic, Ionic, and Magnetic Properties of Li9V3(P2O7)3(PO4)2 Cathode Material for Li-Ion Batteries", Quan Kuang et al.

### SUMMARY OF THE INVENTION

### PROBLEMS TO BE SOLVED BY THE INVENTION

However, Li₉V₃(P₂O₇)₃(PO₄)₂ is a material with a crystal structure that is greatly different from that of conventional LiCoO₂ that has been used as a positive electrode material, and an ionic conductor has not existed that is a solid electrolyte suitable for Li₉V₃(P₂O₇)₃(PO₄)₂.

Hence, an ionic conductor and a secondary battery are desired wherein it is possible to provide a high machine property with Li₉V₃(P₂O₇)₃(PO₄)₂ that is a positive electrode material with a high theoretical capacitance and to reduce an internal resistance thereof.

### MEANS FOR SOLVING THE PROBLEM

One aspect of the present embodiment is characterized in that a composition formula is Li₉₊ₓAl₃(P₂O₇)₃(PO₄)₂₋ₓ(GeO₄)ₓ, wherein x is a range of 0 < x ≤ 2.0.

Furthermore, another aspect of the present embodiment is characterized in that a composition formula is Li₉₊ₓAl₃ (P₂O₇)₃(PO₄)₂₋ₓ(SiO₄)ₓ, wherein x is a range of 0 < x ≤ 2.0.

Furthermore, another aspect of the present embodiment is characterized in that a composition formula is Li₉₊ₓAl₃(P₂O₇)₃(PO₄)₂₋ₓ(SiO₄)_{x/2}(GeO₄)_{x/2}, wherein x is a range of 0 < x ≤ 2.0.

Furthermore, another aspect of the present embodiment is characterized in that a composition formula is Li₉₊ₓAl₃(P₂O₇)₃(PO₄)₂₋ₓ(MO₄)ₓ, wherein M is one or two or more elements selected from Si, Ge, Sn, and Pb, and x is a range of 0 < x ≤ 2.0.

### EFFECTS OF THE INVENTION

According to a disclosed ionic conductor and secondary battery, it is possible to provide a high matching property with Li₉V₃(P₂O₇)₃(PO₄)₂ that is a positive electrode material and reduce an internal resistance thereof, and hence, it is possible to improve a characteristic of a secondary battery.

### BRIEF DESCRIPTION OF THE DRAWINGS

FIG. 1: a structural diagram of LVPP that is used as a positive electrode material
FIG. 2: a structural diagram of an ionic conductor with a NASICON structure
FIG. 3: a structural diagram of an ionic conductor in a first embodiment
FIG. 4: a structural diagram of a secondary battery in a second embodiment
FIG. 5: a correlation diagram between composition ratios and electrical conductivities of ionic conductors in Practical Examples 1 - 5
FIG. 6: a diagram that illustrates results of X-ray diffraction for ionic conductors in Practical Examples 1 - 5
FIG. 7: a correlation diagram between composition ratios and electrical conductivities of ionic conductors in Practical Examples 6 - 10
FIG. 8: a diagram that illustrates results of X-ray diffraction for ionic conductors in Practical Examples 6 - 10
FIG. 9: a correlation diagram between composition ratios and electrical conductivities of ionic conductors in Practical Examples 11 - 13
FIG. 10: a diagram that illustrates results of X-ray diffraction for ionic conductors in Practical Examples 11 - 13

### EMBODIMENTS FOR IMPLEMENTING THE INVENTION

Embodiments for implementing the invention will be described below. Here, an identical letter or numeral will be attached to an identical member or the like and a description(s) thereof will be omitted.

### [A first embodiment]

As described previously, Li₉V₃ (P₂O₇)₃(PO₄) utilizes an oxidation reduction reaction of V³⁺ → V⁵⁺, and has a theoretical capacitance that is 1.2 times as large as that of LiCoO₂ Because this Li₉V₃(P₂O₇)₃(PO₄)₂ has a crystal structure that is different from that of LiCoO₂, an ionic conductor that is a solid electrolyte with a high matching property with Li₉V₃ (P₂O₇)₃(PO₄) has not existed at present. Therefore, even though a secondary battery is fabricated by combining a known ionic conductor with Li₉V₃(P₂O₇)₃(PO₄)₂ as an electrostatic electrode, it is not possible to derive an effect of using Li₉V₃(P₂O₇)₃(PO₄)₂ sufficiently at present. Hence, an ionic conductor is desired wherein it is possible to derive an effect of using Li₉V₃(P₂O₇)₃(PO₄)₂ sufficiently.

Meanwhile, the inventor executed a study for a preferable ionic conductor in a case where Li₉V₃(P₂O₇)₃(PO₄)was used as a positive electrode material, and as a result, conceived and reached an idea that an ionic conductor with a crystal structure similar to that of Li₉V₃(P₂O₇)₃(PO₄)₂ provided a high matching property. As a result of synthesis of an ionic conductor that was tried based on this idea, it was possible to obtain an ionic conductor that had a crystal structure similar to that of Li₉V₃(P₂O₇)₃(PO₄)₂, namely, in a space group of P-3c1 (165). The present embodiment is based on such a process, and it is possible to improve a characteristic of a secondary battery more than a conventional one by using Li₉V₃ (P₂O₇)₃(PO₄) was a positive electrode material and using an ionic conductor in the present embodiment as a solid electrolyte.

### (An ionic conductor)

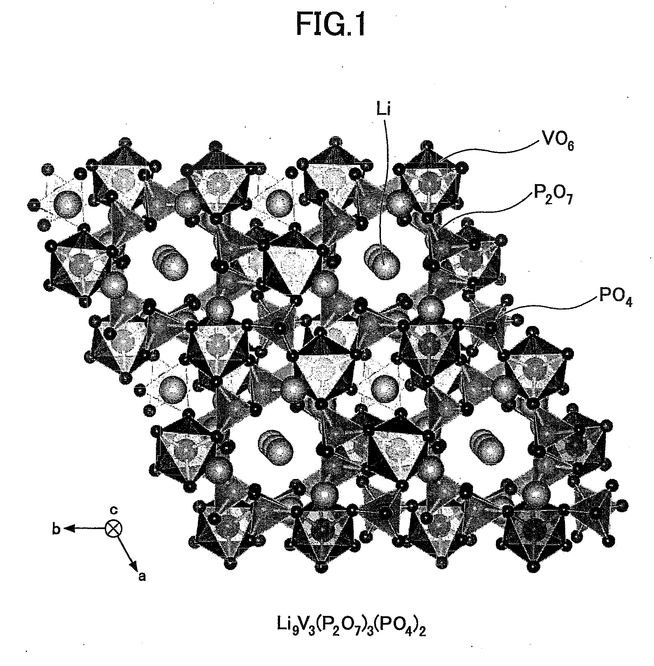

First, Li₉V₃(P₂O₇)₃(PO₄) will be described that is a positive electrode material of a secondary battery. As illustrated in FIG. 1, Li₉V₃(P₂O₇)₃(PO₄)₂ is formed of Li (lithium), VO₆ P₂O₇, and PO₄. Li₉V₃(P₂O₇)₃(PO₄)₂ is such that a space group thereof is P-3c1 (165) and there is an anisotropy in a direction of a c-axis that is a diffusion pathway. Here, Li₉V₃ (P₂O₇)₃(PO₄) may be described as an LVPP in the present embodiment.

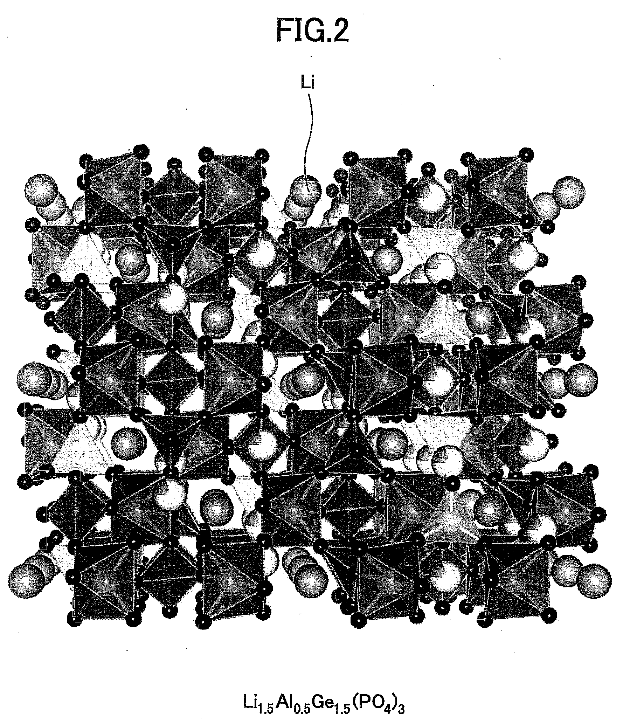

On the other hand, FIG. 2 illustrates Li_{1.5}Al_{0.5}Ge_{1.5}(PO₄)₃ that is a solid electrolyte with a NASICON structure that is commonly used as a solid electrolyte. Li_{1.5}Al_{0.5}Ge_{1.5}(PO₄)₃ is such that a space group thereof is R-3cH (167), and a crystal structure thereof is different from that of Li₉V₃(P₂O₇)₃(PO₄)_{2,} and further, a diffusion pathway of lithium is also different from that of Li₉V₃(P₂O₇)₃(PO₄)₂ and is isotropic. In this Li_{1.5}Al_{0.5}Ge_{1.5}(PO₄)₃, a migration distance of lithium from a solid electrolyte to an outermost surface of a positive electrode is 12.769 angstrom.

Next, an ionic conductor for forming a solid electrolyte in the present embodiment will be described. An ionic conductor in the present embodiment is Li₉₊ₓAl₃(P₂O₇)₃(PO₄)₂₋ₓ(GeO₄)ₓ, wherein a part of (PO₄)in Li₉V₃(P₂O₇)₃(PO₄)₂ is replaced by *GeO₄). Herein, x is a range of 0 < x ≤ 2.0. Thus, a part of (PO₄) is replaced by (GeO₄), so that Li is increased accordingly and a carrier is also increased. Here, Li₉V₃(P₂O₇)₃(PO₄)₂ may be described as LAPP and Li₉₊ₓAl₃(P₂O₇)₃(PO₄)₂₋ₓ(GeO₄)ₓ may be described as an LAPPG in the present embodiment.

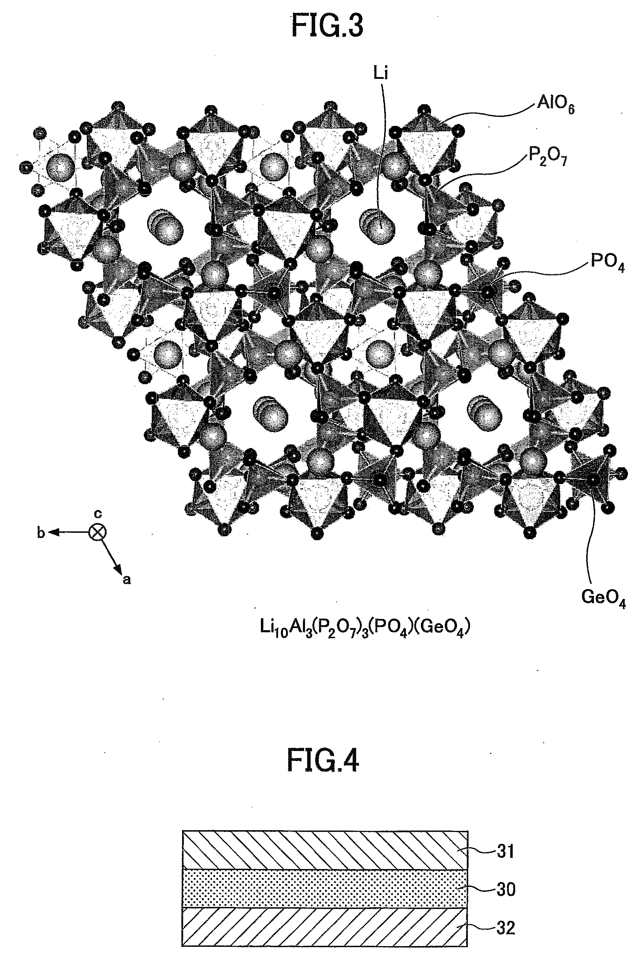

FIG. 3 illustrates a structure of Li₁₀Al₃(P₂O₇)₃(PO₄)(GeO₄) that is an ionic conductor in the present embodiment. This Li₁₀Al₃(P₂O₇)₃(PO₄)(GeO₄) is formed of Li(lithium), AlO₆, P₂O₇, PO₄ and GeO₄. Li₁₀Al₃(P₂O₇)₃(PO₄)(GeO₄) in the preset embodiment has a crystal structure similar to that of Li₉V₃ (P₂O₇)₃(PO₄) ₂ that is a positive electrode material, wherein a space group is P-3c1 (165) and there is an anisotropy in a direction of a c-axis that is a diffusion pathway of lithium. That is, a space group is had that is a crystal structure identical to that of Li₉V₃(P₂O₇)₃(PO₄)₂ that is a positive electrode material and an anisotropy is had that is similar to a diffusion pathway of lithium. Therefore, a matching property with Li₉V₃(P₂O₇)₃(PO₄)₂ that is a positive electrode material is high. Furthermore, a migration distance of lithium from a solid electrolyte of this ionic conductor to an outermost surface of a positive electrode is 6.797 angstrom that is less than that of LAGP, so that it is possible to reduce a migration resistance between lithium sites.

Furthermore, an ionic conductor in the present embodiment may be Li₉₊ₓAl₃ (P₂O₇)₃(PO₄)₂₋ₓ(SiO₄)ₓ wherein a part of (PO₄) is replaced by (SiO₄), other than Li₉₊ₓAl₃ (P₂O₇)₃(PO₄)₂₋ₓ(GeO₄)ₓ as described above. Furthermore, Li₉₊ₓAl₃(P₂O₇)₃(PO₄)₂₋ₓ(SiO₄)_{x/2}(GeO₄)_{x/2} may be provided wherein a part of (PO₄) is replaced by (SiO₄) and (GeO₄ Here, in the present embodiment, Li₉₊ₓAl₃(P₂O₇)₃(PO₄)₂₋ₓ(SiO₄)ₓ may be described as an LAPPS and Li₉₊ₓAl₃(P₂O₇)₃(PO₄)₂₋ₓ(SiO₄)_{x/2}(GeO₄)_{x/2} may be described as an LAPPSG.

Moreover, it is considered that it is possible for an element such as C, Sn, or Pb to obtain a similar effect, other than Ge in (GeO₄) and Si in (SiO₄). That is, an ionic conductor in the present embodiment may be such that a composition formula thereof is Li₉₊ₓAl₃(P₂O₇)₃(PO₄)₂₋ₓ(MO₄)_{x,} wherein M is formed of one or two or more elements selected from C, Si, Ge, Sn, and Pb.

### (A manufacturing method for an ionic conductor)

Next, a manufacturing method for Li₁₀Al₃(P₂O₇)₃(PO₄)(GeO₄) will be described that is an ionic conductor in the present embodiment.

First, lithium phosphate (Li₃PO₄), aluminum oxide (Al₂O₃), germanium oxide (GeO2), diammonium hydrogen phosphate ((NH₄)₂HPO₄) are mixed by using a mortar made of agate. Then, a mixture thereof is put into a platinum crucible and heated to 900 °C, subsequently, is slowly cooled to 850 °C at 50 °C/H, and subsequently, is slowly cooled to 600 °C at 2 °C/H, and subsequently, slow cooling to a room temperature is executed at 200 °C/H.

Here, weighed values of lithium phosphate (Li₃PO₄), aluminum oxide (Al₂O₃), germanium oxide (GeO₂), diammonium hydrogen phosphate ((NH₄)₂HPO₄) are 4.0878 g, 1.6922 g, 11.5767 g, and 10.2285 g, respectively. Thus, it is possible to fabricate Li₁₀Al₃(P₂O₇)₃(PO₄) (GeO₄) that is an ionic conductor in the present embodiment.

### [A second embodiment]

Next, a secondary battery in a second embodiment will be described. A secondary battery in the present embodiment is such that an ionic conductor in the first embodiment is used for a solid electrolyte. Specifically, a secondary battery in the present embodiment is of a structure in such a manner that an electrode 31 that is a positive electrode is provided on one face of a solid electrolyte 30 formed of an ionic conductor in the first embodiment and an electrode 32 that is a negative electrode is provided on the other face thereof, as illustrated in FIG. 4. Here, Li₉V₃(P₂O₇)₃(PO₄)₂ is used for the electrode 31 that is a positive electrode and Li is used for the electrode 32 that is a negative electrode.

### PRACTICAL EXAMPLES

Next, practical examples of an ionic conductor in the first embodiment will be described.

### (Practical Example 1)

For Practical Example 1, an LAPPG that was Li₉₊ₓAl₃(P₂O₇)₃(PO₄)₂₋ₓ(GeO₄)ₓ wherein x was 0.25, namely, Li_{9.25}Al₃(P₂O₇)₃(PO₄)_{1.75} (GeO₄)_{0.25} was fabricated.

Specifically, first, 1.9708 g of lithium carbonate (Li₂CO₃), 0.8818 g of aluminum oxide (Al₂O₃), 0.1510 g of germanium oxide (GeO₂), and 5.9010 g of diammonium hydrogen phosphate ((NH₄)₂HPO₄) were weighed. Then, the weighed lithium carbonate, aluminum oxide, germanium oxide, and diammonium hydrogen phosphate were mixed by a ball mill at 200 rpm for 3 hours, and subsequently, a tentative baking thereof was executed under an argon atmosphere at a temperature of 300 °C for 5 hours. Then, the tentatively baked one was milled by a ball mill at 300 rpm for 3 hours, pelleting thereof was executed by using a die with 10 mmφ, and subsequently, a main baking thereof was executed under an argon atmosphere at a temperature of 750 °C for 10 hours, so that an ionic conductor in Practical Example 1 was fabricated. As an electrical conductivity of a fabricated ionic conductor was measured, the electrical conductivity was 3.4 × 10⁻⁷ S·cm⁻¹.

### (Practical Example 2)

For Practical Example 2, an LAPPG that was Li₉₊ₓAl₃ (P₂O₇)₃(PO₄)₂₋ₓ(GeO₄)ₓ ≤ wherein x was 0.5, namely, Li_{9.5}Al₃(P₂O₇)₃(PO₄)_{1.5}(GeO₄)_{0.5} was fabricated.

Specifically, first, 1.9960 g of lithium carbonate (Li₂CO₃), 0.8697 g of aluminum oxide (Al₂O₃), 0.2979 g of germanium oxide (GeO₂), and 5.6323 g of diammonium hydrogen phosphate ((NH₄)₂HPO₄) were weighed. Then, the weighed lithium carbonate, aluminum oxide, germanium oxide, and diammonium hydrogen phosphate were mixed by a ball mill at 200 rpm for 3 hours, and subsequently, a tentative baking thereof was executed under an argon atmosphere at a temperature of 300 °C for 5 hours. Then, the tentatively baked one was milled by a ball mill at 300 rpm for 3 hours, pelleting thereof was executed by using a die with 10 mmφ, and subsequently, a main baking thereof was executed under an argon atmosphere at a temperature of 750 °C for 10 hours, so that an ionic conductor in Practical Example 2 was fabricated. As an electrical conductivity of a fabricated ionic conductor was measured, the electrical conductivity was 2.2 × 10⁻⁷ S·cm⁻¹.

### (Practical Example 3)

For Practical Example 3, an LAPPG that was Li₉₊ₓAl₃(P₂O₇)₃(PO₄)₂₋ₓ(GeO₄)ₓ wherein x was 1.0, namely, Li₁₀Al₃(P₂O₇)₃(PO₄)_{1.0}(GeO₄)_{1.0} was fabricated.

Specifically, first, 2.0447 g of lithium carbonate (Li₂CO₃), 0.8465 g of aluminum oxide (Al₂O₃), 0.5793 g of germanium oxide (GeO₂), and 5.1142 g of diammonium hydrogen phosphate ((NH₄)₂HPO₄) were weighed. Then, the weighed lithium carbonate, aluminum oxide, germanium oxide, and diammonium hydrogen phosphate were mixed by a ball mill at 200 rpm for 3 hours, and subsequently, a tentative baking thereof was executed under an argon atmosphere at a temperature of 300 °C for 5 hours. Then, the tentatively baked one was milled by a ball mill at 300 rpm for 3 hours, pelleting thereof was executed by using a die with 10 mmφ, and subsequently, a main baking thereof was executed under an argon atmosphere at a temperature of 750 °C for 10 hours, so that an ionic conductor in Practical Example 3 was fabricated. As an electrical conductivity of a fabricated ionic conductor was measured, the electrical conductivity was 1.7 × 10⁻⁷ S.cm⁻¹_{.}

### (Practical Example 4)

For Practical Example 4, an LAPPG that was Li₉₊ₓAl₃(P₂O₇)₃(PO₄)₂₋ₓ(GeO₄)ₓ wherein x was 1.5, namely, Li_{10.5}Al₃(P₂O₇)₃(PO₄)_{0.5}(GeO₄)_{1.5} was fabricated.

Specifically, first, 2.0885 g of lithium carbonate (Li₂CO₃), 0.8230 g of aluminum oxide (Al₂O₃), 0.8454 g of germanium oxide (GeO₂), and 4.6260 g of diammonium hydrogen phosphate ((NH₄)₂HPO₄) were weighed. Then, the weighed lithium carbonate, aluminum oxide, germanium oxide, and diammonium hydrogen phosphate were mixed by a ball mill at 200 rpm for 3 hours, and subsequently, a tentative baking thereof was executed under an argon atmosphere at a temperature of 300 °C for 5 hours. Then, the tentatively baked one was milled by a ball mill at 300 rpm for 3 hours, pelleting thereof was executed by using a die with 10 mmφ, and subsequently, a main baking thereof was executed under an argon atmosphere at a temperature of 750 °C for 10 hours, so that an ionic conductor in Practical Example 4 was fabricated. As an electrical conductivity of a fabricated ionic conductor was measured, the electrical conductivity was 1.5 × 10⁻⁷ S.cm⁻¹_{.}

### (Practical Example 5)

For Practical Example 5, Li₁₁Al₃(P₂O₇)₃(GeO₄)₂. that was Li₉₊ₓAl₃(P₂O₇)₃(PO₄)₂-ₓ(GeO₄)ₓ wherein x was 2.0 was fabricated.

Specifically, first, 2.1338 g of lithium carbonate (Li₂CO₃), 0.8020 g of aluminum oxide (Al₂O₃), 1.0987 g of germanium oxide (GeO₂), and 4.1585 g of diammonium hydrogen phosphate ((NH₄)₂HPO₄) were weighed. Then, the weighed lithium carbonate, aluminum oxide, germanium oxide, and diammonium hydrogen phosphate were mixed by a ball mill at 200 rpm for 3 hours, and subsequently, a tentative baking thereof was executed under an argon atmosphere at a temperature of 300 °C for 5 hours. Then, the tentatively baked one was milled by a ball mill at 300 rpm for 3 hours, pelleting thereof was executed by using a die with 10 mmφ, and subsequently, a main baking thereof was executed under an argon atmosphere at a temperature of 750 °C for 10 hours, so that an ionic conductor in Practical Example 5 was fabricated. As an electrical conductivity of a fabricated ionic conductor was measured, the electrical conductivity was 1.0 × 10⁻⁷ S.cm⁻¹_{.}

### (Practical Example 6)

For Practical Example 6, an LAPPS that was Li₉₊ₓAl₃(P₂O₇)₃(PO₄)₂₋ₓ(SiO₄)ₓ wherein x was 0.25, namely, Li_{9.25}Al₃(P₂O₇)₃(PO₄)_{1.75}(SiO₄)_{0.25} was fabricated.

Specifically, first, 1.9970 g of lithium carbonate (Li₂CO₃), 0.8935 g of aluminum oxide (Al₂O₃), 0.0891 g of silicon oxide (SiO₂), and 5.9768 g of diammonium hydrogen phosphate ((NH₄)₂HPO₄) were weighed. Then, the weighed lithium carbonate, aluminum oxide, silicon oxide, and diammonium hydrogen phosphate were mixed by a ball mill at 200 rpm for 3 hours, and subsequently, a tentative baking thereof was executed under an argon atmosphere at a temperature of 300 °C for 5 hours. Then, the tentatively baked one was milled by a ball mill at 300 rpm for 3 hours, pelleting thereof was executed by using a die with 10 mmφ, and subsequently, a main baking thereof was executed under an argon atmosphere at a temperature of 750 °C for 10 hours, so that an ionic conductor in Practical Example 6 was fabricated. As an electrical conductivity of a fabricated ionic conductor was measured, the electrical conductivity was 1.5 × 10⁻⁷ S·m⁻¹_{.}

### (Practical Example 7)

For Practical Example 7, an LAPPS that was Li₉₊ₓAl₃(P₂O₇)₃(PO₄)₂₋ₓ(SiO₄)ₓ wherein x was 0.5, namely, Li_{9.5}Al₃(P₂O₇)₃(PO₄)_{1.5}(SiO₄)_{0.5} was fabricated.

Specifically, first, 2.0483 g of lithium carbonate (Li₂CO₃), 0.8920 g of aluminum oxide (Al₂O₃), 0.1763 g of silicon oxide (SiO₂), and 5.7787 g of diammonium hydrogen phosphate ((NH₄)₂HPO₄) were weighed. Then, the weighed lithium carbonate, aluminum oxide, silicon oxide, and diammonium hydrogen phosphate were mixed by a ball mill at 200 rpm for 3 hours, and subsequently, a tentative baking thereof was executed under an argon atmosphere at a temperature of 300 °C for 5 hours. Then, the tentatively baked one was milled by a ball mill at 300 rpm for 3 hours, pelleting thereof was executed by using a die with 10 mmφ, and subsequently, a main baking thereof was executed under an argon atmosphere at a temperature of 750 °C for 10 hours, so that an ionic conductor in Practical Example 7 was fabricated. As an electrical conductivity of a fabricated ionic conductor was measured, the electrical conductivity was 2.4 × 10⁻⁷ S.cm⁻¹_{.}

### (Practical Example 8)

For Practical Example 8, an LAPPS that was Li₉₊ₓAl₃ (P₂O₇)₃(PO₄)₂₋ₓ(SiO₄)ₓ wherein x was 1.0, namely, Li₁₀Al₃(P₂O₇)₃(PO₄)_{1.0}SiO₄)_{1.0} was fabricated.

Specifically, first, 2.1500 g of lithium carbonate (Li₂CO₃), 0.8895 g of aluminum oxide (Al₂O₃), 0.3498 g of silicon oxide (SiO₂), and 5.3805 g of diammonium hydrogen phosphate ((NH₄)₂HPO₄) were weighed. Then, weighed lithium carbonate, aluminum oxide, silicon oxide, and diammonium hydrogen phosphate were mixed by a ball mill at 200 rpm for 3 hours, and subsequently, tentative baking thereof was executed under argon atmosphere at a temperature of 300 °C for 5 hours. Then, tentatively baked one was milled by a ball mill at 300 rpm for 3 hours, pelleting thereof was executed by using a die with 10 mmφ, and subsequently, main baking thereof was executed under argon atmosphere at a temperature of 750 °C for 10 hours, so that an ionic conductor in Practical Example 8 was fabricated. As an electrical conductivity of a fabricated ionic conductor was measured, the electrical conductivity was 3.7 × 10⁻⁷ S·cm⁻¹.

### (Practical Example 9)

For Practical Example 9, an LAPPS that was Li₉₊ₓAl₃(P₂O₇)₃(PO₄)₂₋ₓ(SiO₄)ₓ wherein x was 1.5, namely, Li_{10.5}Ala₃(PaO₇)₃(PO₄)_{0.5}(SiO₄)_{1.5} was fabricated.

Specifically, first, 2.2521 g of lithium carbonate (Li₂CO₃), 0.8872 g of aluminum oxide (Al₂O₃), 0.5238 g of silicon oxide (SiO₂), and 4.9853 g of diammonium hydrogen phosphate ((NH₄)₂HPO₄) were weighed. Then, the weighed lithium carbonate, aluminum oxide, silicon oxide, and diammonium hydrogen phosphate were mixed by a ball mill at 200 rpm for 3 hours, and subsequently, a tentative baking thereof was executed under an argon atmosphere at a temperature of 300 °C for 5 hours. Then, the tentatively baked one was milled by a ball mill at 300 rpm for 3 hours, pelleting thereof was executed by using a die with 10 mmφ, and subsequently, a main baking thereof was executed under an argon atmosphere at a temperature of 750 °C for 10 hours, so that an ionic conductor in Practical Example 9 was fabricated. As an electrical conductivity of a fabricated ionic conductor was measured, the electrical conductivity was 4.1 × 10⁻⁷ S·cm⁻¹.

### (Practical Example 10)

For Practical Example 10, Li₁₁Al₃(P₂O₇)₃ (SiO₄)_{2.0} that was Li₉₊ₓAl₃(P₂O₇)₃(PO₄)₂₋ₓ(SiO₄)ₓ wherein x was 2.0 was fabricated.

Specifically, first, 2.5470 g of lithium carbonate (Li₂CO₃), 0.8855 g of aluminum oxide (Al₂O₃), 0.6954 g of silicon oxide (SiO₂), and 4.5880 g of diammonium hydrogen phosphate ((NH₄)₂HPO₄) were weighed. Then, the weighed lithium carbonate, aluminum oxide, silicon oxide, and diammonium hydrogen phosphate were mixed by a ball mill at 200 rpm for 3 hours, and subsequently, a tentative baking thereof was executed under an argon atmosphere at a temperature of 300 °C for 5 hours. Then, the tentatively baked one was milled by a ball mill at 300 rpm for 3 hours, pelleting thereof was executed by using a die with 10 mmφ, and subsequently, a main baking thereof was executed under an argon atmosphere at a temperature of 750 °C for 10 hours, so that an ionic conductor in Practical Example 10 was fabricated. As an electrical conductivity of a fabricated ionic conductor was measured, the electrical conductivity was 2.6 × 10⁻⁷ S·cm⁻¹_{.}

### (Practical Example 11)

For Practical Example 11, an LAPPSG that was Li₉₊ₓAl₃(P₂O₇)₃(PO₄)₂₋ₓ(SiO₄)_{x/2}(GeO₄)_{x/2} wherein x was 0.5, namely, Li_{9.5}Al₃(P₂O₇)₃(PO₄)_{1.5}(SiO₄)_{0.25}(GeO₄)_{0.25} was fabricated.

Specifically, first, 2.2290 g of lithium carbonate (Li₂CO₃), 0.8807 g of aluminum oxide (Al₂O₃), 0.0877 g of silicon oxide (SiO₂), 0.1509 g of germanium oxide (GeO₂), and 5.7018 g of diammonium hydrogen phosphate ((NH₄)₂HPO₄) were weighed. Then, the weighed lithium carbonate, aluminum oxide, silicon oxide, germanium oxide, and diammonium hydrogen phosphate were mixed by a ball mill at 200 rpm for 3 hours, and subsequently, a tentative baking thereof was executed under an argon atmosphere at a temperature of 300 °C for 5 hours. Then, the tentatively baked one was milled by a ball mill at 300 rpm for 3 hours, pelleting thereof was executed by using a die with 10 mmφ, and subsequently, a main baking thereof was executed under an argon atmosphere at a temperature of 750 °C for 10 hours, so that an ionic conductor in Practical Example 11 was fabricated. As an electrical conductivity of a fabricated ionic conductor was measured, the electrical conductivity was 1_{.}5 × 10⁻⁷ S·cm⁻¹.

### (Practical Example 12)

For Practical Example 12, an LAPPSG that was Li₉₊ₓAl₃(P₂O₇)₃(PO₄)₂₋ₓ(SiO₄)_{x/2}(GeO₄)_{x/2} wherein x was 1.0, namely, Li₁₀Al₃(P₂O₇)₃(PO₄)_{1.0}(SiO₄)_{0.5}(GeO₄)_{0.5} was fabricated.

Specifically, first, 2.0957 g of lithium carbonate (Li₂CO₃), 0.8670 g of aluminum oxide (Al₂O₃), 0.1720 g of silicon oxide (SiO₂), 0.2980 g of germanium oxide (GeO₂), and 5.2437 g of diammonium hydrogen phosphate ((NH₄)₂HPO₄) were weighed. Then, the weighed lithium carbonate, aluminum oxide, silicon oxide, germanium oxide, and diammonium hydrogen phosphate were mixed by a ball mill at 200 rpm for 3 hours, and subsequently, a tentative baking thereof was executed under an argon atmosphere at a temperature of 300 °C for 5 hours. Then, the tentatively baked one was milled by a ball mill at 300 rpm for 3 hours, pelleting thereof was executed by using a die with 10 mmφ, and subsequently, a main baking thereof was executed under an argon atmosphere at a temperature of 750 °C for 10 hours, so that an ionic conductor in Practical Example 12 was fabricated. As an electrical conductivity of a fabricated ionic conductor was measured, the electrical conductivity was 3.5 × 10⁻⁷ S·cm⁻¹.

### (Practical Example 13)

For Practical Example 13, Li₁₁A₁₃(P₂O₇)₃(SiO₄)_{1.0}(GeO₄)_{1.0} that was Li₉₊ₓAl₃(P₂O₇)₃(PO₄)₂₋ₓ(SiO₄)_{x/2}(GeO₄)_{x/2} wherein x was 2.0 was fabricated.

Specifically, first, 2.2389 g of lithium carbonate (Li₂CO₃), 0.8429 g of aluminum oxide (Al₂O₃), 0.3300 g of silicon oxide (SiO₂), 0.5733 g of germanium oxide (GeO₂), and 4.3653 g of diammonium hydrogen phosphate ((NH₄)₂HPO₄) were weighed. Then, the weighed lithium carbonate, aluminum oxide, silicon oxide, germanium oxide, and diammonium hydrogen phosphate were mixed by a ball mill at 200 rpm for 3 hours, and subsequently, a tentative baking thereof was executed under an argon atmosphere at a temperature of 300 °C for 5 hours. Then, the tentatively baked one was milled by a ball mill at 300 rpm for 3 hours, pelleting thereof was executed by using a die with 10 mmφ, and subsequently, a main baking thereof was executed under an argon atmosphere at a temperature of 750 °C for 10 hours, so that an ionic conductor in Practical Example 13 was fabricated. As an electrical conductivity of a fabricated ionic conductor was measured, the electrical conductivity was 1.4 × 10⁻⁷ S·cm⁻¹.

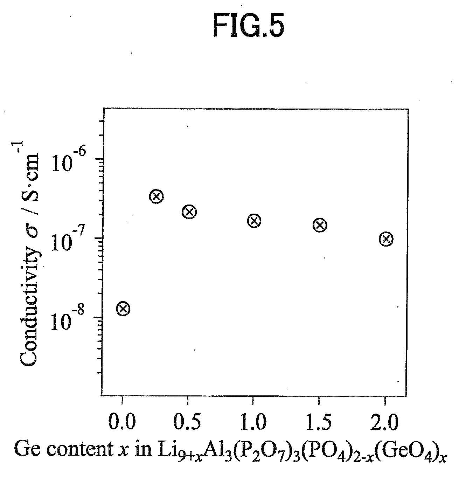

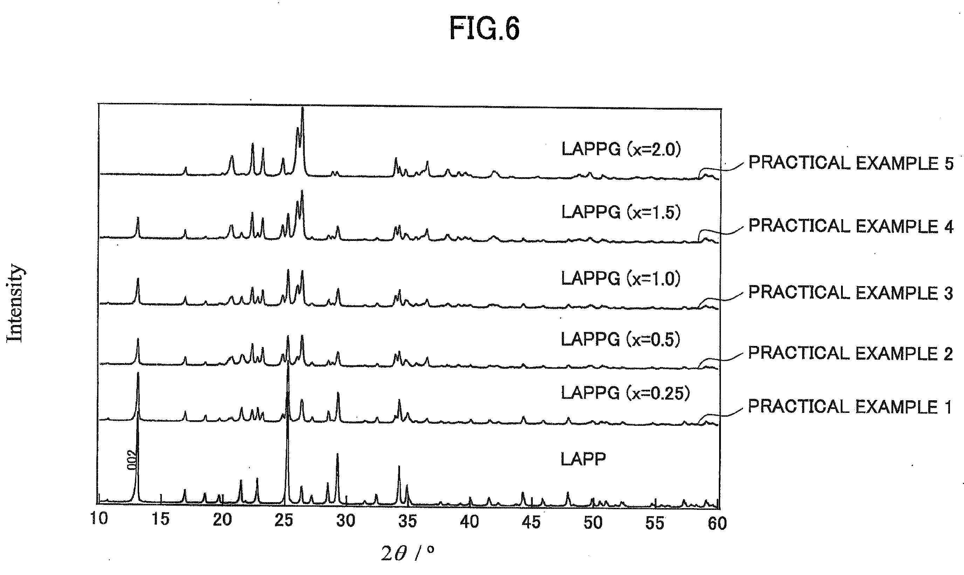

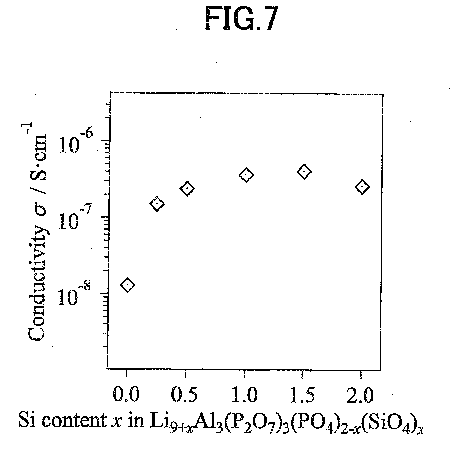

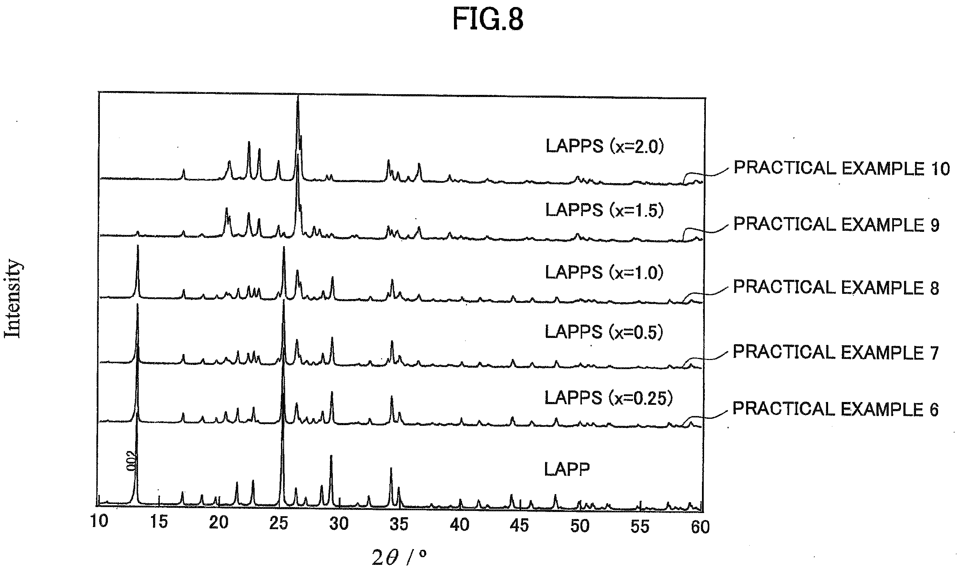

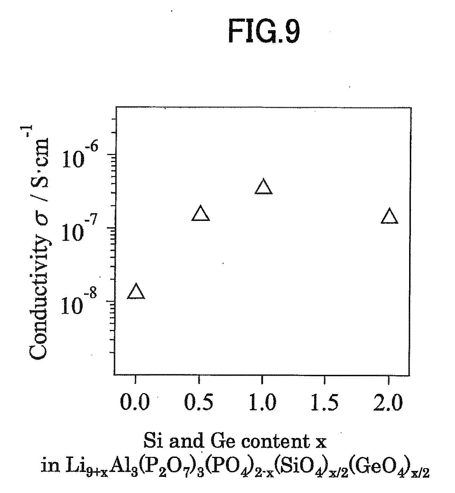

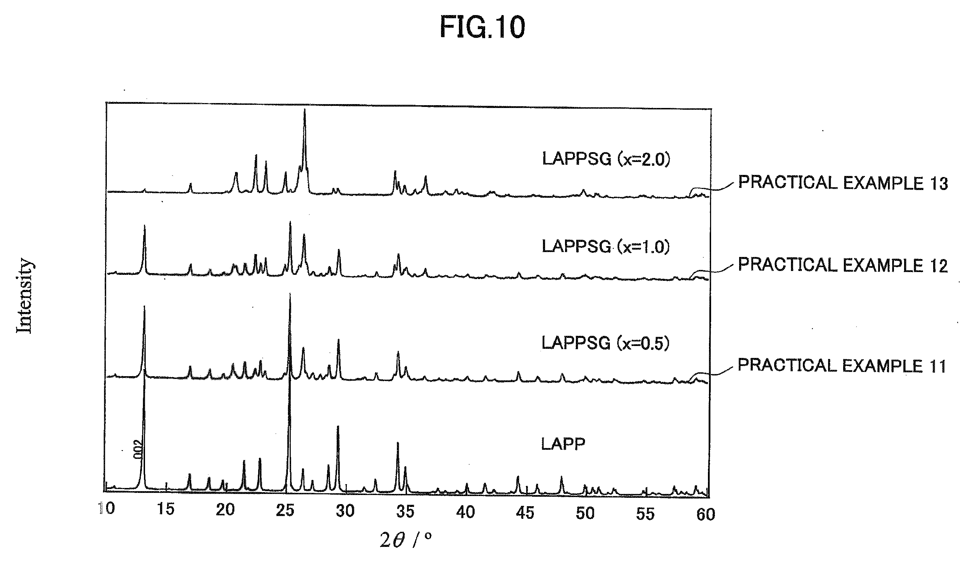

The electrical conductivities of the ionic conductors in Practical Examples 1 - 5 are illustrated in FIG. 5 and Table 1 and results of X-ray diffraction thereof are illustrated in FIG. 6. Furthermore, the electrical conductivities of the ionic conductors in Practical Examples 6 - 10 are illustrated in FIG. 7 and Table 2 and results of X-ray diffraction thereof are illustrated in FIG. 8. Furthermore, the electrical conductivities of the ionic conductors in Practical Examples 11 - 13 are illustrated in FIG. 9 and Table 3 and results of X-ray diffraction thereof are illustrated in FIG. 10.

**Table 1:**

| | x | Electrical conductivity [S·cm⁻¹] |
|---|---|---|
| LigAl₃ (P₂O₇)₃(PO₄)₂ | 0.0 | 1.3 × ≤ 10⁻⁸ |
| Practical Example 1 | 0.25 | 3.4 × ≤ 10⁻⁸ |
| Practical Example 2 | 0.5 | 2.2 × ≤ 10⁻⁸ |
| Practical Example 3 | 1.0 | 1.7 × ≤ 10⁻⁸ |
| Practical Example 4 | 3.5 | 1.5 × ≤ 10⁻⁷ |
| Practical Example 5 | 2.0 | 1.0 × ≤ 10⁻⁷ |

**Table 2:**

| | x | Electrical conductivity [S·cm⁻¹] |
|---|---|---|
| Li₉Al₃(P₂O₇)₃(PO₄)₂ | 0.0 | 1.3 × 10⁻⁸ |
| Practical Example 6 | 0.25 | 1.5 × 10⁻⁷ |
| Practical Example 7 | 0.5 | 2.4 × 10⁻⁷ |
| Practical Example 8 | 1.0 | 3.7 × 10⁻⁷ |
| Practical Example 9 | 1.5 | 4.1 × 10⁻⁸ |
| Practical Example 10 | 2.0 | 2.6 × 10⁻⁸ |

**Table 3:**

| | x | Electrical conductivity [S·cm⁻¹] |
|---|---|---|
| Li₉Al₃(P₂O₇)₃(PO₄)₂ | 0.0 | 1.3 × 10⁻⁸ |
| Practical Example 11 | 0.5 | 1.5 × 10⁻⁸ |
| Practical Example 12 | 1.0 | 3.5 × 10⁻⁷ |
| Practical Example 13 | 2.0 | 1.4 × 10⁻⁸ |

Although an embodiment has been described in detail above, limitation to a particular embodiment is not provided and a variety of alterations and modifications are possible within a scope recited in what is claimed.

### EXPLANATION OF LETTERS OR NUMERALS

- 30: solid electrolyte
- 31: electrode (positive electrode)
- 32: electrode (negative electrode)

## Claims

1. An ionic conductor, **characterized in that** a composition formula thereof is Li₉₊ₓAl₃(P₂O₇)₃(PO₄)₂₋ₓ(MO₄)ₓ, wherein M is one or two or more elements selected from Si, Ge, Sn, and Pb, and wherein x is a range of 0 < x ≤ 2.0.

2. An ionic conductor according to claim 1, wherein M is Ge.

3. An ionic conductor according to claim 1, wherein M is Si.

4. An ionic conductor according to claim 1, wherein the composition formula thereof is Li₉₊ₓAl₃(P₂O₇)₃(PO₄)₂₋ₓ(SiO₄)_{x/2}(GeO₄)ₓ/2.

5. The ionic conductor as claimed in any of claims 1 to 4, **characterized in that** the ionic conductor has a crystal structure of space group p-3c1.

6. A secondary battery, **characterized by** having:
a solid electrolyte formed of the ionic conductor as claimed in any of claims 1 to 5;
an electrode formed on one face of the solid electrolyte; and
an electrode formed on the other face of the solid electrolyte.

7. The secondary battery as claimed in claim 6, **characterized in that** the electrode formed on one face is formed of Li₉V₃(P₂O₇)₃(PO₄)₂.

8. The secondary battery as claimed in claim 6 or 7, **characterized in that** the ionic conductor and the electrode formed on one face are of an identical crystal structure.

## Patentansprüche

1. Ionischer Leiter, **dadurch gekennzeichnet, dass** eine Zusammensetzungsformel davon ist Li₉₊ₓAl₃(P₂O₇)₃(PO₄)₂₋ₓ(MO₄)ₓ, worin M ein oder zwei oder mehrere Elemente ist, ausgewählt aus Si, Ge, Sn und Pb und worin x im Bereich von 0 < x ≤ 2,0 ist.

2. Ionischer Leiter gemäß Anspruch 1, worin M Ge ist.

3. Ionischer Leiter gemäß Anspruch 1, worin M Si ist.

4. Ionischer Leiter gemäß Anspruch 1, worin die Zusammensetzungsformel davon ist Li₉₊ₓAl₃(P₂O₇)₃(PO₄)₂₋ₓ(SiO₄)_{x/2}(GeO₄)_{x/2}.

5. Ionischer Leiter gemäß einem der Ansprüche 1 bis 4, **dadurch gekennzeichnet, dass** der ionische Leiter eine Kristallstruktur der Raumgruppe p-3c1 hat.

6. Sekundärbatterie, **gekennzeichnet durch**:
einen festen Elektrolyten, gebildet aus dem ionischen Leiter gemäß einem der Ansprüche 1 bis 5;
eine Elektrode, gebildet auf einer Fläche des festen Elektrolyten; und
eine Elektrode, gebildet auf der anderen Fläche des festen Elektrolyten.

7. Sekundärbatterie gemäß Anspruch 6, **dadurch gekennzeichnet, dass** die Elektrode, die auf einer Fläche gebildet ist, aus Li₉V₃(P₂O₇)₃(PO₄)₂ gebildet ist.

8. Sekundärbatterie gemäß Anspruch 6 oder 7, **dadurch gekennzeichnet, dass** der ionische Leiter und die Elektrode, die auf einer Fläche gebildet sind, eine identische Kristallstruktur haben.

## Revendications

1. Conducteur ionique, **caractérisé en ce qu'**une formule de composition de celui-ci est Li₉₊ₓAl₃(P₂O₇)₃(PO₄)₂₋ₓ(MO₄)ₓ, dans laquelle M est un ou deux éléments ou plus choisis parmi Si, Ge, Sn, et Pb, et dans laquelle x est dans la plage de 0 < x ≤ 2,0.

2. Conducteur ionique selon la revendication 1, dans lequel M est Ge.

3. Conducteur ionique selon la revendication 1, dans lequel M est Si.

4. Conducteur ionique selon la revendication 1, dans lequel la formule de composition de celle-ci est Li₉₊ₓAl₃(P₂O₇)₃(PO₄)₂₋ₓ(SiO₄)_{x/2}(GeO₄)_{x/2}.

5. Conducteur ionique selon l'une quelconque des revendications 1 à 4, **caractérisé en ce que** le conducteur ionique a une structure cristalline du groupe spatial p-3c1.

6. Batterie secondaire, **caractérisée en ce qu'**elle comprend :
un électrolyte solide formé du conducteur ionique selon l'une quelconque des revendications 1 à 5 ;
une électrode formée sur une face de l'électrolyte solide ; et
une électrode formée sur l'autre face de l'électrolyte solide.

7. Batterie secondaire selon la revendication 6, **caractérisée en ce que** l'électrode formée sur une face est formée de Li₉V₃(P₂O₇)₃(PO₄)_{2.}

8. Batterie secondaire selon la revendication 6 ou 7, **caractérisée en ce que** le conducteur ionique et l'électrode formée sur une face sont d'une structure cristalline identique.
